# EUROPÄISCHE PATENTSCHRIFT

(11) **EP 2 785 728 B1**
(45) Veröffentlichungstag und Bekanntmachung des Hinweises auf die Patenterteilung: **28.06.2017**
(21) Anmeldenummer: 12790909.1
(22) Anmeldetag: 26.11.2012
(51) Int. Cl.: C07G 1/00, C08J 3/03, C08H 8/00, C08L 97/00

(54) **VERFAHREN ZUR GEWINNUNG VON NIEDERMOLEKULAREM LIGNIN (NML)**
PROCESS FOR OBTAINING LOW MOLECULAR WEIGHT LIGNIN (LML)
PROCÉDÉ POUR OBTENIR DE LA LIGNINE À BAS POIDS MOLÉCULAIRE (NML)

(30) Priorität: 28.11.2011 EP 11190969
(43) Veröffentlichungstag der Anmeldung: 08.10.2014
(73) Patentinhaber: Annikki GmbH, 8020 Graz (AT)
(72) Erfinder: TERS, Thomas, 1230 Wien (AT); FACKLER, Karin, 1140 Wien (AT); MESSNER, Kurt, 1170 Wien (AT); ERTL, Ortwin, 8076 Vasoldsberg (AT)
(74) Vertreter: Schwarz & Partner Patentanwälte OG
(86) Internationale Anmeldenummer: PCT/EP2012/073574
(87) Internationale Veröffentlichungsnummer: WO 2013/079431

(56) Entgegenhaltungen:
- WO-A1-93/15261
- US-A- 4 395 543
- MAX PHILLIPS: "THE CHEMISTRY OF LIGNIN. II. FRACTIONAL EXTRACTION OF LIGNIN FROM CORN COBS (150TH CONTRIBUTION FROM THE COLOR AND FARM WASTE DIVISION)", JOURNAL OF THE AMERICAN CHEMICAL SOCIETY, Bd. 50, Nr. 7, 6. Juli 1928 (1928-07-06), Seiten 1986-1989, XP002690195, DOI: 10.1021/ja01394a029
- QUESADA-MEDINA J ET AL: "Organosolv extraction of lignin from hydrolyzed almond shells and application of the delta-value theory", BIORESOURCE TECHNOLOGY, ELSEVIER BV, GB, Bd. 101, Nr. 21, 1. November 2010 (2010-11-01), Seiten 8252-8260, XP027134535, ISSN: 0960-8524 [gefunden am 2010-07-01]
- XUEJUN PAN ET AL: "Organosolv Ethanol Lignin from Hybrid Poplar as a Radical Scavenger: Relationship between Lignin Structure, Extraction Conditions, and Antioxidant Activity", JOURNAL OF AGRICULTURAL AND FOOD CHEMISTRY, AMERICAN CHEMICAL SOCIETY, US, Bd. 54, Nr. 16, 9. August 2006 (2006-08-09), Seiten 5806-5813, XP008148495, ISSN: 0021-8561, DOI: 10.1021/JF0605392 [gefunden am 2006-07-07]

## Beschreibung

Die vorliegende Erfindung betrifft ein Verfahren zur Gewinnung von NML aus lignocellulosischem Material durch alkalische Extraktion und dessen Umsetzung zu Harz oder Kunststoff.

Im Zusammenhang mit der Verknappung von Rohöl gewinnt der nachwachsende Rohstoff Lignocellulose (Stroh, Holz, Papierabfälle etc.) als Ausgangsmaterial für chemische Produkte und Treibstoffe sehr an Bedeutung. Lignocellulose besteht aus den ultrastrukturell vernetzten, polymeren Hauptkomponenten Cellulose, Hemicellulose und Lignin, die häufig etwa 85 - 90 % des Rohstoffes ausmachen.

Die Spaltung der als Polymere vorliegenden Komponenten und ihre Auftrennung in einzelne Produktströme sowie deren weitere Verarbeitung zu höherwertigen Produkten ist die Aufgabe von Bioraffinerien der biochemischen Plattform. Die Rentabilität solcher Bioraffinerien ist weitgehend davon abhängig, welche Wertschöpfung aus den Produktströmen erzielt werden kann. Dies wird wiederum massiv von der Reinheit und den Eigenschaften der einzelnen Produktströme beeinflusst, da nachgeschaltete Auftrennungsprozesse schwierig und kostspielig sein können. Als ideal kann also ein Prozess betrachtet werden, bei dem die Spaltung der einzelnen Hauptkomponenten möglichst selektiv erfolgt. Zu diesem Zweck ist es von Vorteil, den Schritt der Extraktion von NML an den Anfang von Bioraffinerieverfahren zu stellen.

Lignin gewinnt als Ersatz für petrochemisch erzeugte Aromaten sehr stark an wirtschaftlicher Bedeutung. Die Einsatzmöglichkeiten des gewonnen Lignins sind wiederum sehr von seiner chemischen Zusammensetzung, vor allem aber vom Molekulargewicht der gewonnenen Ligninfraktion bestimmt. Abhängig vom Herstellungsprozess können Lignine höchst unterschiedliche Eigenschaften aufweisen.

Durch den neuerdings entwickelten Lignoboost Prozess (P. Tomani, 2009, The Lignoboost Process, NWBC-2009 The 2nd Nordic Wood Biorefinery Conference, Helsinki, Finland, September 2-4, 2009, 181-188*.)* kann aus der Dicklauge des Kraftpulpings Lignin abgetrennt und kommerziell genutzt werden. Zusätzlich kommt es dadurch zu einer Entlastung des Recovery Boilers was eine Kapazitätssteigerung des Zellstoffwerkes ermöglicht. Das dabei anfallende Sulfatlignin ist durch Repolymerisationsreaktionen im Laufe der Kochung zum Teil hoch kondensiert, enthält außerdem ca. 2% Schwefel in Form von Thiolgrupen und eignet sich gut für die thermische Verwertung. Sein Anwendungsbereich als Chemierohstoff ist aber durch den, durch die Thiolgruppen verursachten Geruch, sehr begrenzt. Aus dem traditionellen Sulfitprozess können Lignosulfonate gewonnen werden die aufgrund ihrer Wasserlöslichkeit in bestimmten Anwendungen eingesetzt werden können. Nachteilig bei beiden Ligninen ist der Schwefelgehalt.

Für Anwendungen in der Kunststoff- und Harzherstellung sind aber insbesondere schwefelfreie, niedermolekulare Ligninfraktionen, vorzugsweise mit einem hohen Reinheitsgrad, gefragt.

Schwefelfreie Lignine stammen hauptsächlich aus Organosolvprozessen, aus Sodaaufschlüssen oder aus Bioraffinerieprozessen.

Unter den, in Bioraffinerien zum Aufschluss von Lignocellulose angewandten Verfahren sind besonders alkalische Verfahren hervorzuheben, deren Aufschlussprinzip primär die Entfernung des Lignins ist. Das zugrunde liegende chemische Prinzip ist die alkalische Hydrolyse, durch die sowohl die Verbindung zwischen Lignin und Hemicellulose, als auch die Essigsäure-Hemicellulose Ester gespalten werden.

Ein derartiges Verfahren wurde in Avgerinos & Wang (1983), Biotechnology and Bioengineering, Vol XXV, 67-83 beschrieben. Mehr detailliert, in US 4,395,543 ist ein Verfahren zum Aufschluss von Lignocellulose beansprucht, bei dem eine Extraktionslösung bestehend aus Wasser, zwischen 40 bis 75% Alkohol und einem pH Wert zwischen 11 und 14 verwendet wird. Zusätzlich geht aus dem Patent hervor, dass bei Erhöhung der Ethanolkonzentration bis auf 100% die Menge des freigesetzten Lignins gegen Null geht. Weiters wird beschrieben, dass mit Erhöhung der Alkoholkonzentration auf 100% auch die Menge der freigesetzten Zucker gegen Null geht. Das Molekulargewicht der dabei freigesetzten Lignine wird nicht beschrieben.

Überraschenderweise hat es sich bei eigenen Untersuchungen zu alkalischen Aufschlüssen mit Ethanol gezeigt, dass die Aufschlussparameter nicht nur auf die Menge des extrahierten Lignins sondern auch auf dessen Molekulargewicht einen entscheidenden Einfluss haben.

Vor allem durch die Auswahl der Alkoholkonzentration in einer wässrigen alkalischen Lösung kann NML selektiv aus lignocellulosischem Material, z. B. Lignocellulosen gewonnen werden, bzw. die molekulare Größe des extrahierten Lignins beeinflusst werden, wobei sich überraschenderweise herausgestellt hat, dass sich ein solcherart hergestelltes schwefelfreies NML besonders gut für die Umsetzung zu Harz oder Kunststoff eignet.

In einem Aspekt stellt die vorliegende Erfindung ein Verfahren zur Gewinnung von Harz oder Kunststoff unter Verwendung von lignocellulosischem Material zur Verfügung, das dadurch gekennzeichnet ist, dass
a) lignocellulosisches Material mit einer wässerigen Extraktionslösung mit einem Gehalt an einem C₁₋₄-Alkohol, insbesondere Ethanol oder Isopropanol, von 70% v/v bis 95% v/v, insbesondere 75% v/v bis 85% v/v, bei einem pH-Wert von 12 bis 14 behandelt wird, wobei eine wässrige Lösung von niedermolekularem Lignin (NML), das ein mittleres Molekulargewicht Mw von 2000 und darunter aufweist, erhalten wird, und
b) das gemäß a) gewonnene niedermolekulare Lignin zu Harz oder Kunststoff umgesetzt wird.

Ein Verfahren, das durch die vorliegende Erfindung bereitgestellt wird, wird hierin auch als "Verfahren gemäß (nach) vorliegender Erfindung" bezeichnet.

Es wurde beispielsweise überraschenderweise gefunden, dass aus Weizenstroh in einer wässrigen, alkoholischen Lösung bei einer Temperatur von 70°C und einem pH-Wert von ca. 13 bereits nach 30 Minuten ca. 16% des NML (bezogen auf das Gesamtlignin) extrahiert werden kann, wenn der Alkoholgehalt in der wässrigen Lösung 80% v/v beträgt. Wird der Alkoholgehalt bei obigen Bedingungen über 85% erhöht, sinkt die Menge des extrahierbaren NML ab. Das gewonnene Lignin weist dabei überraschenderweise ein sehr niedriges Molekulargewicht (Mw 1340, Mn 850) mit sehr schmaler Molekulargewichtsverteilung (Pd 1,58) auf.

Weiters wurde gefunden, dass die extrahierten Komponenten NML durch mehrmaliges Rezyklieren der Extraktionslösung auf jeweils frisches Lignocellulose-Substrat unter jeweiliger vorheriger Zudosierung der verbrauchten Natronlauge aufkonzentriert werden kann. Wie im Beispiel 2 dargestellt, nimmt mit den gezeigten 6 Rezyklierungsschritten überraschenderweise die Menge des niedermolekularen Lignins linear in der Rezyklierungslösung zu und folgt nicht einer Sättigungskurve, wie zu erwarten gewesen wäre. Nach 6 Zyklen konnte der Ligningehalt von 1,88 mg/mL auf 12,25 mg/ml erhöht werden. Die Anzahl der Extraktionszyklen kann je nach gewünschter Endkonzentration frei gewählt werden und beispielsweise bis zur Sättigung des Lösungsmittels mit NML durchgeführt werden.

Durch die erfolgreiche Aufkonzentrierung wird eine Endkonzentration an NML erreicht, die die Abtrennung des niedermolekularen Lignins wirtschaftlich vertretbar macht. Weiters wird durch die Rezyklierung die Menge des zu verwendenden Alkohols bezogen auf die gesamte behandelte Menge Biomasse drastisch gesenkt.

In einem weiteren Aspekt stellt die vorliegende Erfindung ein Verfahren zur Gewinnung von niedermolekularem Lignin (NML), das ein mittleres Molekulargewicht Mw von 2000 und darunter aufweist, aus lignocellulosischem Material, insbesondere Lignocellulose, zur Verfügung, wobei lignocellulosisches Material mit einer wässrigen Extraktionslösung mit einem Gehalt an einem C₁₋₄-Alkohol, insbesondere Ethanol, oder Isopropanol, von 70% v/v bis 95% v/v, insbesondere 75% v/v bis 85 % v/v, bei einem pH-Wert von 12 bis 14 behandelt wird, wobei eine erste wässrige Lösung von NML erhalten wird, dadurch gekennzeichnet, dass die erste wässrige Lösung von NML dazu verwendet wird weiteres lignocellulosisches Material, insbesondere Lignocellulose, zum Erhalt einer zweiten wässrigen Lösung, in der das NML gegenüber der ersten wässrigen Lösung angereichert ist, zu behandeln; wobei gegebenenfalls diese zweite wässrige Lösung, in der das NML angereichert ist, dazu verwendet wird, weiteres lingocellulosisches Material, insbesondere Lignocellulose zum Erhalt weiterer wässrigen Lösungen, in der das NML gegenüber der zweiten wässrigen Lösung angereichert ist, zu behandeln;
und in einem weiteren Aspekt
ein Verfahren zum Aufkonzentrieren von niedermolekularem Lignin (NML) mit einem Molekulargewicht Mw von 2000 und darunter in einer ersten wässrigen Lösung, die durch die Behandlung von lignocellulosischem Material mit einer wässrigen Extraktionslösung mit einem Gehalt an einem C₁₋₄-Alkohol, insbesondere Ethanol oder Isopropanol, von 70% v/v bis 95% v/v, insbesondere 75% v/v bis 85%, bei einem pH-Wert von 12 bis 14 erhalten wird, dadurch gekennzeichnet, dass diese erste wässrige Lösung zur Behandlung von weiterem lignocellulosischen Material zum Erhalt weiterer wässrigen Lösungen, in der das NML gegenüber der ersten wässrigen Lösung angereichert ist, verwendet wird.

Als lignocellulosisches Material, insbesondere Lignocellulose, haben sich insbesondere Laubholz, Nadelholz, Stroh, Bagasse oder ein- und mehrjährige Gräser als vorteilhaft erwiesen.

In einem weiteren Aspekt stellt die vorliegende Erfindung ein Verfahren gemäß vorliegender Erfindung zur Verfügung, das dadurch gekennzeichnet ist, dass als lignocellulosisches Material Laubholz, Nadelholz, Stroh, Bagasse oder ein- und mehrjährige Gräser, insbesondere Laubholz, Stroh, Bagasse oder ein- und mehrjährige Gräser verwendet werden.

Verfahren gemäß vorliegender Erfindung weisen gegenüber bekannten Verfahren eine Reihe von Vorteilen auf.

Vorteile eines Verfahrens gemäß vorliegender Erfindung gegenüber bekannten Verfahren umfassen z. B.
- den Erhalt einer hohen NML-Konzentration in der wässrigen, alkoholischen Lösung, wodurch die Abtrennung des NML erleichtert wird;
- einen geringeren Bedarf an Extraktionslösung, verglichen mit bekannten Verfahren, der mit der hohen NML-Konzentration verbunden ist,
- die Trennung von NML und hochmolekularem Lignin (HML), die im allgemeinen in einer Extraktionslösung nach dem Stand der Technik gemeinsam anfallen würden;
- den Umstand, dass man für weitere Fraktionierungsschritte zur selektiven Ligningewinnung (HML) und die Rezyklierung der dabei verwendeten Lignin-Lösungen weniger Base (z. B. NaOH) zuzusetzen braucht, als in Verfahren nach dem Stand der Technik, da weniger Base für die Esterspaltung verbraucht wird;
- den Umstand, dass durch den verminderten Bedarf an NaOH in weiteren Fraktionierungsschritten weniger Salze anfallen;
- den Umstand, dass dadurch die Lignin-Lösung auf neue Mengen Stroh eingesetzt werden kann und dadurch auch die Konzentration an Lignin in Lösung gesteigert werden kann bzw. die in Relation zum Stroh benötigte Menge an Lösemitteln reduziert werden kann;
- den Umstand, dass weitere Lignin-Extraktionsschritte nicht durch das Vorhandensein von Acetat (und andere Anionen) gestört werden;
- den Umstand, dass nach einem weiteren Lignin-Extraktionsschritt, bei dem HML anfällt NML nicht gesondert abgetrennt werden muss;
- die Bereitstellung von schwefelfreiem NML in hoher Reinheit für die Kunststoff- und Harzgewinnung.

In einem Verfahren gemäß vorliegender Erfindung wurde gefunden, dass niedermolekulares Lignin, mit einem Mw (mittleres Molekulargewicht) von 1300 bis 1700 erhalten werden kann.

In einem Verfahren gemäß vorliegender Erfinnung wurde gefunden, dass niedermolekulares Lignin mit einem Mn (mittlere Molekularnummer) von 1100 und darunter, z.B. darunter, wie z.B. mit einem Mn von 800 bis 1050, erhalten werden kann.

In einem weiteren Aspekt stellt die vorliegende Erfindung ein Verfahren gemäß der vorliegenden Erfindung zur Verfügung, das dadurch gekennzeichnet ist, dass das in a) gewonnene niedermolekulare Lignin ein Mn von 1100 und darunter aufweist.

In einem Verfahren gemäß vorliegender Erfindung wurde gefunden, dass niedermolekulares Lignin mit einer Polydispersität von 2 und darunter, z.B. darunter, wie z.B. mit einer Polydispersität von 1,3 bis 1,8 erhalten werden kann.

In einem weiteren Aspekt stellt die vorliegende Erfindung ein Verfahren gemäß der vorliegenden Erfindung zur Verfügung, das dadruch gekennzeichnet ist, das das in a) gewonnene niedermolekulare Lignin eine Polydispersität von 2 und darunter aufweist.

In einem Verfahren gemäß vorliegender Erfindung wurde gefunden, dass niedermolekulares Lignin mit einem Zuckergehalt von 2% und darunter, z.B. darunter, erhalten werden kann.

In einem weiteren Aspekt stellt die vorliegende Erfindung ein Verfahren gemäß der vorliegenden Erfindung zur Verfügung, das dadurch gekennzeichnet ist, dass das in a) gewonnene niedermolekulare Lignin einen Zuckergehalt von 2% und darunter besitzt.

### Beschreibung der Abbildungen

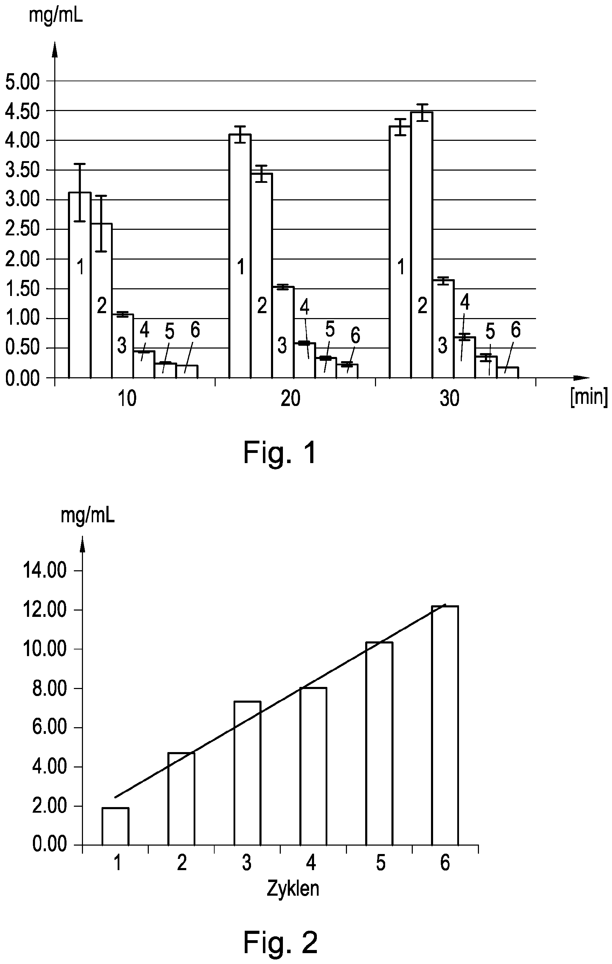

Fig. 1 zeigt den zeitlicher Verlauf der Ligninkonzentration der Extraktionslösung bei 70°C und unterschiedlichen Ethanolgehalten. Auf der x-Achse sind dabei die Minuten (min) aufgetragen. Die Balken zeigen jeweils von links nach rechts die Ligninkonzentration in mg/mL bei jeweils einer Ethanolkonzentration von 40% v/v (1), 60% v/v(2), 80% v/v (3), 90% v/v (4), 95% (5) v/v, und 100% v/v (6).
Fig. 2 zeigt die Zunahme des Ligningehaltes (mg/mL) in der Extraktionslösung bei Rezyklierung der Lösung. Auf der x-Achse sind dabei die Anzahl der Zyklen aufgetragen. Wie aus Fig. 2 ersichtlich, nimmt der Ligningehalt in der Extraktionslösung überraschenderweise praktisch linear mit der Anzahl der Zyklen zu.

In den nachfolgenden Beispielen werden bevorzugte Ausführungsformen der Erfindung näher beschrieben. Alle Temperaturen sind in °Celsius angegeben.

Die folgenden Abkürzungen werden verwendet:
- M_{w}: mittleres Molekulargewicht (molecular weight average)
- Mₙ: mittlere Molekularnummer (molecular number average)
- HPSEC: High Performance Size Exclusion Chromatography
- P_{d}: Polydispersität

Polydispersität ist ein Maß für die Breite einer Molmassenverteilung (MMV). Je größer Q, desto breiter ist die MMV, wobei Q den Bruch aus Mw durch Mn darstellt und größer als 1 ist. Die Molmassenverteilung bezeichnet für einen bestimmten Stoff die Verteilung, nämlich die anteilsmäßige Aufteilung der molaren Masse der enthaltenen Moleküle.

### Beispiel 1

### Zeitlicher Verlauf der Lignin-Konzentration in der Extraktionslösung bei 70°C und unterschiedlichen Ethanolgehalten

10 g zerkleinertes Weizenstroh wurden in einem 500 mL Reaktionsgefäß in 200 mL (5% Feststoffanteil) einer auf 70°C vortemperierten Lösung, bestehend aus Wasser/Ethanol in unterschiedlichen Verhältnissen (40%, 60%, 80%, 90%, 95%, 100% EtOH) und 0,8 g NaOH suspendiert. Die Suspension wurde bei 200 rpm und 70°C für 10, 20 oder 30 Minuten kontinuierlich magnetisch gerührt. Danach wurde der Feststoffanteil durch Filtration abgetrennt. Der Ligningehalt der Lösung wurde photometrisch bei 280nm (ε = 19.4 L g⁻¹ cm⁻¹) gemessen und das Molekulargewicht des gelösten Lignins über ein alkalischen HPSEC System (TSK-G500PW, TSK-G400PW, TSK-G300PW, Tosoh) mit UV-Detektion bestimmt. Wie in Fig. 1 zu erkennen ist geht bei Ethanolkonzentrationen zwischen 40% und 60% in dem untersuchten Zeitraum von 30 Minuten das meiste Lignin in Lösung. Bei höheren Ethanolkonzentrationen nimmt die Ausbeute drastisch ab.

Bei der Untersuchung der Molekulargewichte dieser Fraktionen ist zu erkennen, dass bei 40% und 60% Ethanolgehalt in der Extraktionslösung das Molekulargewicht und die Polydispersität des extrahierten Lignins sehr ähnlich ist, aber überraschenderweise ab 80% EtOH in der Extraktionslösung ein NML mit einer geringen Polydispersität in Lösung geht. Dies geht aus der Fig. 2 hervor.

In der nachfolgenden Tabelle 1 ist die Molekulargewichtsverteilung der bei unterschiedlichen Ethanolkonzentrationen extrahierten Lignine (T = 70°C, t = 30 min) dargestellt:

**Tabelle 1**

| **Probe** | **M_{w}** | **Mₙ** | **P_{d}** |
|---|---|---|---|
| 40% EtOH | 2290 | 1000 | 2.30 |
| 60% EtOH | 2900 | 1030 | 2.82 |
| 80% EtOH | 1340 | 850 | 1.58 |
| 90% EtOH | 1330 | 850 | 1.57 |
| 95% EtOH | 1330 | 850 | 1.57 |
| 100% EtOH | 1370 | 850 | 1.62 |

### Beispiel 2

### Rezyclierung der NML-Lösung

In diesem Versuch soll gezeigt werden, dass die NML Extraktionslösung für weitere Extraktionen rezycliert werden kann. 10 g zerkleinertes Weizenstroh wurden in einem 500 mL Reaktionsgefäß in 200 mL (5% Feststoffanteil) einer Lösung, bestehend aus 20% Wasser, 80% Ethanol und 0,8g NaOH suspendiert. Die Suspension wurde bei 200 rpm, 70°C für 30 Minuten kontinuierlich magnetisch gerührt. Nach der Extraktion wurde die Lösung durch Filtration vom Feststoff abgetrennt, mit neuer NaOH auf den Ausgangs pH-Wert gestellt und frisches Stroh (5% w/v) zugesetzt.

Die Suspension wurde wieder unter den oben beschriebenen Bedingungen behandelt, und nach der Abtrennung des Feststoffes einem weiteren Rezyclierungsschritt unterzogen.

Vor jedem Rezyclierungschritt wurde eine Probe gezogen und der Ligningehalt der Lösung photometrisch bestimmt.

Wie in der Fig.. 2 zu erkennen ist, steigt die Ligninkonzentration in der Lösung mit jedem Rezyclierungs-Schritt relativ linear an. Aus dem jeweils frischen Feststoff wurden im Mittel 1.97 mg/mL Lignin pro Extraktionsschritt entfernt. Abweichungen von diesen Werten können durch die Variabilität des Extraktionsgutes erklärt werden.

Mit Hilfe von HPSEC wurde das Molekulargewicht des Lignins nach jedem Zyklus bestimmt. Wie aus Tabelle 2 unten ersichtlich, in der die Molekulargewichte des Lignins in den einzelnen Stufen der Recyclierung dargestellt sind, ändert sich das Molekulargewicht von Extraktion 1 bis zur Extraktion 6 nur um ca. 10%, es wird also trotz Rezyklierung immer nur das NML aus der Matrix extrahiert

**Tabelle 2**

| **Zyklen** | **M_{w}** | **Mₙ** | **P_{d}** | **Zyklen** |
|---|---|---|---|---|
| **1** | 1510 | 930 | 1.62 | **1** |
| **2** | 1490 | 820 | 1.82 | **2** |
| **3** | 1480 | 920 | 1.61 | **3** |
| **4** | 1540 | 950 | 1.62 | **4** |
| **5** | 1600 | 960 | 1.67 | **5** |
| **6** | 1660 | 970 | 1.71 | **6** |

### Beispiel 3

### Verwendung von Pappel als Substrat

10 g zerspante Pappel wurden in einem 500 mL Reaktionsgefäß in 200 mL (5% Feststoffanteil) einer Lösung, bestehend aus 20% Wasser, 80% Ethanol und 0,8g NaOH suspendiert. Zum Vergleich wurde ein Versuch ohne Ethanol mit einer NaOH Konzentration von 1 g/L durchgeführt. Beide Suspensionen wurden bei 200 rpm, 70° C für 18 Stunden kontinuierlich magnetisch gerührt. Nach der Behandlung wurden die Lösungen durch Filtration vom Feststoff abgetrennt und das Molekulargewicht des extrahierten Lignins mittels HPSEC bestimmt.

Wie aus Tabelle 3 unten, in der die Molekulargewichte der aus Pappel extrahierten Lignine ersichtlich sind, erlaubt das eingesetzte System auch eine niedermolekulare Fraktion aus Laubhölzern zu extrahieren, wobei auch hier der Einfluss des Ethanols in der Aufschlusslösung ersichtlich ist.

**Tabelle 3**

| **Probe** | **M_{w}** | **Mₙ** | **P_{d}** |
|---|---|---|---|
| 80% EtOH | 1480 | 1050 | 1.41 |
| ohne EtOH | 3800 | 1230 | 3.09 |

## Patentansprüche

1. Verfahren zur Gewinnung von Harz oder Kunstoff unter Verwendung von lignocellulosischem Material, **dadurch gekennzeichnet, dass**
a) lignocellulosisches Material mit einer wässerigen Extraktionslösung mit einem Gehalt an einem C₁₋₄-Alkohol, insbesondere Ethanol oder Isopropanol, von 70% v/v bis 95% v/v, insbesondere 75% v/v bis 85% v/v, bei einem pH-Wert von 12 bis 14 behandelt wird, wobei eine wässrige Lösung von niedermolekularem Lignin (NML), das ein mittleres Molekulargewicht Mw von 2000 und darunter aufweist, erhalten wird, und
b) das gemäß a) gewonnene niedermolekulare Lignin zu Harz oder Kunstoff umgesetzt wird.

2. Verfahren nach Anspruch 1, **dadurch gekennzeichnet, dass** in a) eine erste wässerige Lösung eines niedermolekularen Lignins erhalten wird, die dazu verwendet wird, weiteres lignocellulosisches Material, insbesondere Lignocellulose, zu behandeln, um weiteres niedermolekularem Lignin in dieser ersten Lösung anzureichern.

3. Verfahren nach einem der Ansprüche 1 oder 2, **dadurch gekennzeichnet, dass** als lignocellulosisches Material Laubholz, Nadelholz, Stroh, Bagasse oder ein- und mehrjährige Gräser verwendet werden.

4. Verfahren nach einem der Ansprüche 1 bis 3, **dadurch gekennzeichnet, dass** das in a) gewonnene niedermolekulare Lignin ein Mn von 1100 und darunter aufweist.

5. Verfahren nach einem der Ansprüche 1 bis 4, **dadurch gekennzeichnet, dass** das in a) gewonnene niedermolekulare Lignin eine Polydispersität von 2 und darunter aufweist.

6. Verfahren nach einem der Ansprüche 1 bis 5, **dadurch gekennzeichnet, dass** das in a) gewonnene niedermolekulare Lignin einen Zuckergehalt von 2% und darunter besitzt.

7. Verfahren zur Gewinnung von niedermolekularem Lignin, das ein mittleres Molekulargewicht Mw von 2000 und darunter aufweist, aus lignocellulosischem Material, insbesondere Lignocellulose, wobei lignocellulosisches Material mit einer wässerigen Extraktionslösung mit einem Gehalt an einem C₁₋₄-Alkohol, insbesondere Ethanol oder Isopropanol, von 70% v/v bis 95% v/v, insbesondere 75% v/v bis 85% v/v, bei einem pH-Wert von 12 bis 14 behandelt wird, wobei eine erste wässrige Lösung von niedermolekularem Lignin erhalten wird, **dadurch gekennzeichnet, dass** die erste wässerige Lösung von niedermolekularem Lignin dazu verwendet wird, weiteres ligncellulosisches Material, insbesondere Lignocellulose, zum Erhalt einer zweiten wässrigen Lösung, in der das niedermolekulare Lignin gegenüber der ersten wässrigen Lösung angereichert ist, zu behandeln.

8. Verfahren nach Anspruch 7, **dadurch gekennzeichnet, dass** die zweite wässrige Lösung, in der das niedermolekulare Lignin angereichert ist, dazu verwendet wird, weiteres lignocellulosisches Material, insbesondere Lignocellulose zum Erhalt weiterer wässriger Lösungen, in der das niedermolekulare Lignin gegenüber der zweiten wässrigen Lösung angereichert ist, zu behandeln.

9. Verfahren zum Aufkonzentrieren von niedermolekularem Lignin mit einem Molekulargewicht Mw von 2000 und darunter in einer ersten wässrigen Lösung, die durch die Behandlung von lignocellulosisches Material mit einer wässerigen Extraktionslösung mit einem Gehalt an einem C₁₋₄-Alkohol, insbesondere Ethanol oder Isopropanol, von 70% v/v bis 95% v/v, insbesondere 75% v/v bis 85% v/v, bei einem pH-Wert von 12 bis 14 erhalten wird, **dadurch gekennzeichnet, dass** diese erste wässrige Lösung zur Behandlung von weiterem lignocellulosischen Material zum Erhalt weiterer wässrigen Lösungen, in der das niedermolekulare Lignin gegenüber der ersten wässrigen Lösung angereichert ist, verwendet wird.

## Claims

1. A process for obtaining resin or plastics using a lignocellulosic material, which process is **characterized in that**
a) a lignocellulosic material is treated with an aqueous extraction solution having a content of a C₁₋₄-alcohol, in particular ethanol or isopropanol, of from 70% v/v to 95% v/v, in particular from 75% v/v to 85% v/v, at a pH-value of from 12 to 14, whereby an aqueous solution of low-molecular lignin (LML) is obtained which exhibits a mean molecular weight Mw of 2000 and less, and
b) the low-molecular lignin obtained according to a) is converted into resin or plastics.

2. A process according to claim 1, **characterized in that**, in a), a first aqueous solution of a low-molecular lignin is obtained which is used to treat additional lignocellulosic material, in particular lignocellulose, in order to enrich additional low-molecular lignin in said first solution.

3. A process according to any of claims 1 or 2, **characterized in that** hardwood, softwood, straw, bagasse or annual and perennial grasses is/are used as the lignocellulosic material.

4. A process according to any of claims 1 to 3, **characterized in that** the low-molecular lignin obtained in a) exhibits an Mn of 1100 and less.

5. A process according to any of claims 1 to 4, **characterized in that** the low-molecular lignin obtained in a) exhibits a polydispersity of 2 and less.

6. A process according to any of claims 1 to 5, **characterized in that** the low-molecular lignin obtained in a) has a sugar content of 2% and less.

7. A a process for obtaining low-molecular lignin, which exhibits a mean molecular weight Mw of 2000 and less, from a lignocellulosic material, in particular lignocellulose, wherein a lignocellulosic material is treated with an aqueous extraction solution having a content of a C₁₋₄-alcohol, in particular ethanol or isopropanol, of from 70% v/v to 95% v/v, in particular from 75% v/v to 85% v/v, at a pH-value of from 12 to 14, whereby a first aqueous solution of low-molecular lignin is obtained, **characterized in that** the first aqueous solution of low-molecular lignin is used to treat additional lignocellulosic material, in particular lignocellulose, in order to obtain a second aqueous solution in which the low-molecular lignin is enriched compared with the first aqueous solution.

8. A process according to claim 7, **characterized in that** the second aqueous solution, in which the low-molecular lignin is enriched, is used to treat additional lignocellulosic material, in particular lignocellulose, in order to obtain further aqueous solutions in which the low-molecular lignin is enriched compared with the second aqueous solution.

9. A process for concentrating low-molecular lignin having a molecular weight Mw of 2000 and less in a first aqueous solution which is obtained by treating a lignocellulosic material with an aqueous extraction solution having a content of a C₁₋₄-alcohol, in particular ethanol or isopropanol, of from 70% v/v to 95% v/v, in particular from 75% v/v to 85% v/v, at a pH-value of from 12 to 14, **characterized in that** said first aqueous solution is used for the treatment of additional lignocellulosic material in order to obtain further aqueous solutions in which the low-molecular lignin is enriched compared with the first aqueous solution.

## Revendications

1. Procédé d'obtention de résine ou de matière plastique en utilisant un matériau lignocellulosique, **caractérisé en ce que** :
a) un matériau lignocellulosique est traité avec une solution d'extraction aqueuse ayant une teneur en alcool en C₁-C₄, en particulier de l'éthanol ou de l'isopropanol, de 70 % en v/v à 95 % en v/v, en particulier de 75 % en v/v à 85 % en v/v, à une valeur du pH de 12 à 14, dans lequel on obtient une solution aqueuse de lignine de faible poids moléculaire (NML), qui présente un poids moléculaire moyen Mw de 2 000 et en dessous, et
b) la lignine de faible poids moléculaire obtenue selon a) est transformée en résine ou en matière plastique.

2. Procédé selon la revendication 1, **caractérisé en ce que** l'on obtient dans a) une première solution aqueuse d'une lignine de faible poids moléculaire qui est utilisée pour traiter un autre matériau lignocellulosique, en particulier de la lignocellulose, pour enrichir encore en lignine de faible poids moléculaire cette première solution.

3. Procédé selon l'une quelconque des revendications 1 ou 2, **caractérisé en ce que** l'on utilise du bois feuillu, du conifère, de la paille, de la bagasse et du fourrage annuel ou pluriannuel.

4. Procédé selon l'une quelconque des revendications 1 à 3, **caractérisé en ce que** la lignine de faible poids moléculaire obtenue dans a) présente un Mn de 1 100 et en dessous.

5. Procédé selon l'une quelconque des revendications 1 à 4, **caractérisé en ce que** la lignine de faible poids moléculaire obtenue dans a) présente une polydispersité de 2 et en dessous.

6. Procédé selon l'une quelconque des revendications 1 à 5, **caractérisé en ce que** la lignine de faible poids moléculaire obtenue dans a) possède une teneur en sucre de 2 % et en dessous.

7. Procédé d'obtention de lignine de faible poids moléculaire, qui présente un poids moléculaire moyen Mw de 2 000 et en dessous, constituée d'un matériau lignocellulosique, en particulier de la lignocellulose, dans lequel un matériau lignocellulosique est traité avec un solution d'extraction aqueuse ayant une teneur en alcool en C₁-C₄, en particulier de l'éthanol ou de l'isopropanol, de 70 % en v/v à 95 % en v/v, en particulier de 75 % en v/v à 75 % en v/v, à une valeur du pH de 12 à 14, dans lequel on obtient une première solution aqueuse de lignine de faible poids moléculaire, **caractérisé en ce que** la première solution aqueuse de lignine de faible poids moléculaire est utilisée pour traiter un autre matériau lignocellulosique, en particulier de la lignocellulose, pour obtenir une seconde solution aqueuse dans laquelle la lignine de faible poids moléculaire est enrichie par rapport à la première solution aqueuse.

8. Procédé selon la revendication 7, **caractérisé en ce que** la seconde solution aqueuse, dans laquelle la lignine de faible poids moléculaire est enrichie, est utilisée pour traiter un autre matériau lignocellulosique, en particulier de la lignocellulose, pour obtenir d'autres solutions aqueuses, dans lesquelles la lignine de faible poids moléculaire est enrichie par rapport à la seconde solution aqueuse.

9. Procédé de renforcement de la concentration de lignine de faible poids moléculaire ayant un poids moléculaire Mw de 2 000 et en dessous dans une première solution aqueuse, qui est obtenue par le traitement d'un matériau lignocellulosique avec une solution d'extraction aqueuse ayant une teneur en alcool en C₁-C₄, en particulier de l'éthanol ou de l'isopropanol, de 70 % en v/v à 95 % en v/v, en particulier de 75 % en v/v à 85 % en v/v, à une valeur du pH de 12 à 14, **caractérisé en ce que** cette première solution aqueuse est utilisée pour le traitement d'un autre matériau lignocellulosique pour obtenir d'autres solutions aqueuses, dans lesquelles la lignine de faible poids moléculaire est enrichie par rapport à la première solution aqueuse.
